# EUROPEAN PATENT SPECIFICATION

(11) **EP 4 439 803 B1**
(45) Date of publication and mention of the grant of the patent: **15.10.2025**
(21) Application number: 23775336.3
(22) Date of filing: 23.03.2023
(51) Int. Cl.: H01M 50/204

(54) **BATTERY MODULE, BATTERY PACK INCLUDING THE SAME AND VEHICLE**
BATTERIEMODUL, BATTERIEPACK MIT DIESEM UND FAHRZEUG
MODULE DE BATTERIE, BLOC DE BATTERIE COMPRENANT CE MODULE ET VÉHICULE

(30) Priority: 23.03.2022 KR 20220036333; 22.03.2023 KR 20230037478
(43) Date of publication of application: 02.10.2024
(73) Proprietor: LG Energy Solution, Ltd., Seoul 07335 (KR)
(72) Inventor: JANG, Byung Do, Daejeon 34122 (KR); LEE, Hyoung Suk, Daejeon 34122 (KR)
(74) Representative: Plasseraud IP
(86) International application number: PCT/KR2023/003885
(87) International publication number: WO 2023/182841

(56) References cited:
- WO-A1-2021/092754
- WO-A1-2022/004972
- CN-A- 110 429 359
- CN-U- 213 340 555
- KR-A- 20170 021 122
- KR-A- 20170 059 178
- KR-A- 20190 032 843
- KR-A- 20190 110 782
- KR-A- 20200 030 965
- US-A1- 2020 058 974
- US-A1- 2020 194 851
- US-A1- 2022 052 395

## Description

### TECHNICAL FIELD

### CROSS-REFERENCE TO RELATED APPLICATION

The present application claims the benefit of the priority of Korean Patent Application Nos. 10-2022-0036333, filed on March 23, 2022, and 10-2023-0037478, filed on March 22, 2023.

### TECHNICAL FIELD

The present invention relates to a battery module capable of minimizing a temperature deviation in an entire battery cell during cooling of the battery cell and improving cooling efficiency, a battery pack including the same, and vehicle.

### BACKGROUND ART

In general, secondary batteries are commonly applied to portable devices as well as electric vehicles (EVs) or hybrid electric vehicles (HEVs) driven by an electric driving source. These secondary batteries are attracting attention as a new energy source for improving eco-friendliness and energy efficiency in that the secondary batteries are capable of drastically reducing the use of fossil fuels and do not generate any by-products.

The plurality of secondary batteries are connected to each other to constitute a battery module. Here, the battery module needs a cooling system to prevent overheating. That is, as a capacity of the battery module increases, an amount of generated heat increases, and thus, a water-cooling type cooling system is required instead of an air-cooling type cooling system.

However, the water-cooling type cooling system according to the related art has a problem in that it is difficult to uniformly cool the entire battery module. That is, the water-cooling type cooling system according to the related art has a problem in that a temperature deviation in entire battery module occurs, and as a result, cooling efficiency is deteriorated.

In the prior art, document US2020/194851 A1 discloses A battery module including a plurality of battery cells; a top plate configured to cover an upper side of the battery cells; a bottom plate configured to cover a lower side of the battery cells, the module having a pair of heatsinks provided at the upper side and the lower side of the battery cells, respectively each having a coolant injection portion and a coolant discharge portion protruding out of the battery module.

Documents US2020/058974, WO2022/004972 A1, US 2022/052395 A1, CN 213 340 555 U and CN 110 429 359 A disclose other examples of battery modules with cooling means.

### DISCLOSURE OF THE INVENTION

### TECHNICAL PROBLEM

An object of the present invention is to provide a battery module capable of minimizing a temperature deviation in an entire battery cell during cooling of the battery cell and improving cooling efficiency, a battery pack including the same, and vehicle.

### TECHNICAL SOLUTION

A battery module of the present invention includes a case assembly configured to accommodate and cool a battery cell, wherein the case assembly includes: a top cooling member provided with a top plate configured to cover a top surface of the battery cell, a first heatsink configured to cool the top surface of the battery cell while cooling water passes therethrough, a first supply port configured to supply the cooling water to the first heatsink, and a first discharge port configured to discharge the cooling water passing through the first heatsink; a bottom cooling member provided with a bottom plate configured to cover a bottom surface of the battery cell, a second heatsink configured to cool the bottom surface of the battery cell while the cooling water passes therethrough, a second supply port configured to supply the cooling water to the second heatsink, and a second discharge port configured to discharge the cooling water passing through the second heatsink; and a connector member provided with a front plate configured to cover one surface of the battery cell in a full-length direction, a supply part configured to supply the cooling water to the first and second supply port, and a collection part configured to collect the cooling water discharged from the first and second discharge ports, wherein the front plate includes: a pair of side covers configured to cover both sides of the battery cell in the full-length direction, respectively; and a central cover which is provided between the pair of side covers and in which the supply part and the collection part are provided, wherein the central cover further protrudes outward from each of the side covers.

The supply part and the collection part may be provided in the front plate.

The supply part may include: a first connection passage provided in the central cover to pass vertically and having upper end lower ends, to which the first supply port and the second supply port are coupled respectively, to supply the cooling water to the first and second supply ports; and a supply passage configured to pass from the outside of the central cover to the first connection passage and supply the cooling water to the first connection passage.

The supply passage may be configured to pass from a side portion of the central cover, which protrudes to the outside of the side cover, to the first connection passage.

The collection part comprises: a second connection passage provided in the central cover to vertically pass and having upper and lower ends, to which the first discharge port and the second discharge port are coupled, respectively, so that the cooling water discharged from the first and second discharge ports passes therethrough; and a collection passage configured to pass from a side portion of the central cover to the second connection passage and collect the cooling water passing through the second connection passage.

The collection passage may be configured to pass from a side portion of the central cover, which protrudes to the outside of the side cover, to the second connection passage.

A coupling hole into which each of the first and second supply ports is fitted may be defined in each of both ends of the first connection passage, and a coupling piece coupled to the first connection passage may be disposed on each of the first supply port and the second supply port.

A coupling hole into which each of the first and second discharge ports is fitted may be defined in each of both ends of the second connection passage, and a coupling piece coupled to the second connection passage may be disposed on each of the first discharge port and the second discharge port.

A sealing ring may be provided between a coupling hole of the first connection passage and the first supply port or between the coupling hole of the first connection passage and the second supply port.

A sealing ring may be provided between a coupling hole of the second connection passage and the first discharge port or between the coupling hole of the second connection passage and the second discharge port.

The battery module may further include a pair of side plates configured to cover both sides of the battery cell in the full-width direction, respectively.

The pair of side plate and the bottom plate may be integrated with each other.

The battery module may further include a rear plate configured to cover the other side of the battery cell in the full-length direction.

A battery pack of the present invention includes: a battery module; and a pack case in which at least one or more battery modules are accommodated, wherein the pack case includes: a supply line configured to supply cooling water to a supply passage of the battery module; and a collection line through which the cooling water collected from a collection passage of the battery module passes.

A vehicle of the present invention includes: a battery pack; and a cooling water supply device configured to supply cooling water to a supply line of the battery pack or collect the cooling water passing through the collection line.

### ADVANTAGEOUS EFFECTS

The battery module of the present invention may include the case assembly for cooling the battery cell using the cooling water, and the case assembly may include the top cooling member, the bottom cooling member, and the connector member. Due to this features, the upper and lower portions of the battery cell may be effectively cooled, and in particular, the entire battery cell may be uniformly cooled, and as a result, the cooling efficiency may be improved by minimizing the temperature deviation of the entire battery cell.

### BRIEF DESCRIPTION OF THE DRAWINGS

FIG. 1 is an exploded perspective view of a battery module according to a first embodiment of the present invention.
FIG. 2 is a front view of the pouch module according to the first embodiment of the present invention.
FIG. 3 is a plan view of the pouch module according to the first embodiment of the present invention.
FIG. 4 is a bottom view of the battery module according to the first embodiment of the present invention.
FIG. 5 is a cross-sectional view of first and second heatsinks according to the first embodiment of the present invention.
FIG. 6 is a cross-sectional view of a connector member according to the first embodiment of the present invention.
FIG. 7 is a partial enlarged view of FIG. 6.
FIGS. 8 to 11 are views illustrating a method for assembling a battery module according to the first embodiment of the present invention.
FIG. 12 is a schematic front view of a battery pack according to a second embodiment of the present invention.
FIG. 13 is a side view of a vehicle according to a third embodiment of the present invention.

### MODE FOR CARRYING OUT THE INVENTION

Hereinafter, embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein. In the drawings, anything unnecessary for describing the present invention will be omitted for clarity, and also like reference numerals in the drawings denote like elements.

### [Battery module according to first embodiment of the present invention]

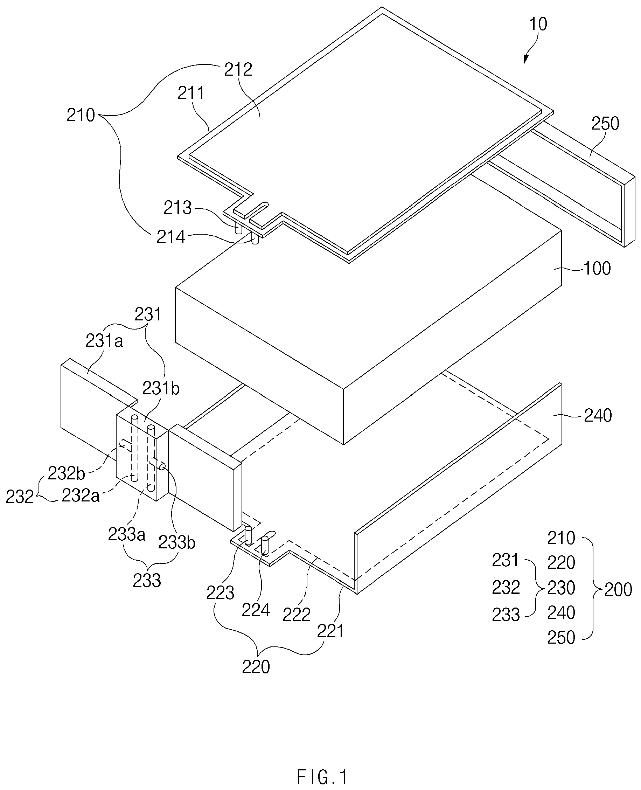

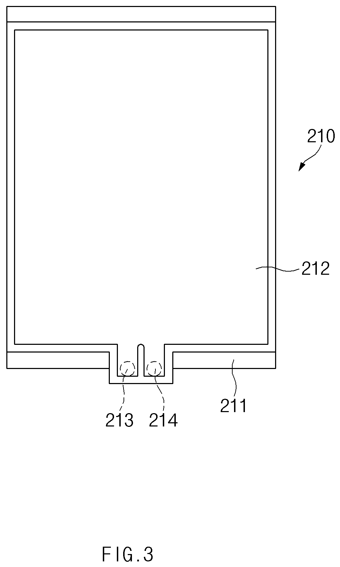

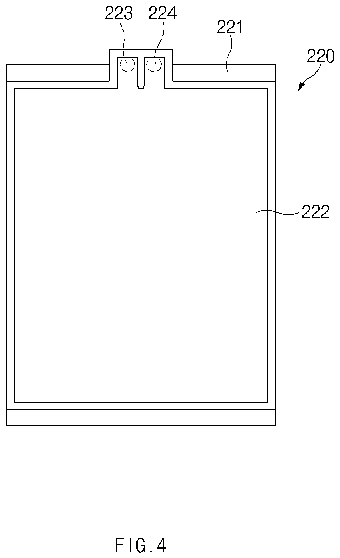

As illustrated in FIGS. 1 to 4, a battery module 10 according to a first embodiment of the present invention includes a battery cell 100 and a case assembly that cools the battery cell 100 using cooling water 200.

### Battery cell

The battery cell 100 includes an electrode assembly, an electrolyte, and a case accommodating the electrode assembly and the electrolyte. The electrode assembly has a structure in which a plurality of electrodes and a plurality of separators are alternately disposed. The plurality of electrodes may be a positive electrode and a negative electrode.

### Case assembly

The case assembly 200 includes a top cooling member 210 that cools an upper portion of the battery cell 100 using cooling water, a bottom cooling member 220 that cools a lower portion of the battery cell 100 using the cooling water, and a connector member 230 that supplies or collects the cooling water to/from the top cooling member 210 and the bottom cooling member 220. Here, the top cooling member 210 and the bottom cooling member 220 have a symmetrical structure with respect to the battery cell 100, and thus manufacturing efficiency may be improved.

The top cooling member 210 includes a top plate 211, a first heatsink 212, a first supply port 213 and a first discharge port 214.

The top plate 211 is made of a metal material and has an area covering an entire top surface of the battery cell 100. In addition, the top plate 211 is provided with an upper extension part 211a extending out of the battery cell 100, and the first supply port 213 and the first discharge port 214 are coupled to the upper extension part 211a. That is, the upper extension part 211a may separate the first supply port 213 and the first discharge port 214 from the battery cell 100 to prevent the first supply port 213 and the first discharge port 214 from being in contact with each other, and as a result, prevent the battery cell 100 from being damaged.

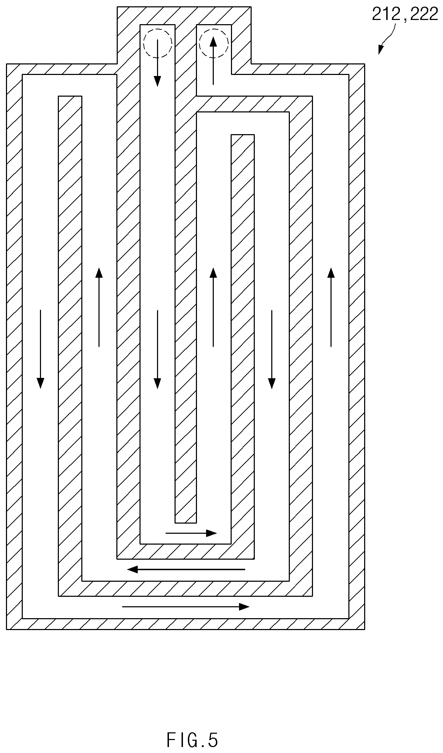

The first heatsink 212 is disposed on a top surface of the top plate 211 to cool the top surface of the battery cell 100 while the cooling water passes therethrough. That is, referring to FIG. 5, the first heatsink 212 cools the entire top surface of the battery cell 100 while providing a cooling water passages through which the cooling water passes in the entire surface. An inlet of the cooling water passage is connected to the first supply port 213, and an outlet is connected to the first discharge port 214.

The first supply port 213 is configured to supply the cooling water to the first heatsink 212 and also is coupled to one side of a bottom surface of the upper extension part 211a and is connected to the inlet of the cooling water passage provided in the first heatsink 212 to supply the cooling water to the cooling water passage of the first heatsink 212.

The first discharge port 214 is configured to discharge the cooling water passing through the first heatsink 212 and also is coupled to the other side of the bottom surface of the upper extension part 211a and is connected to the outlet of the cooling water passage provided in the first heatsink 212 to discharge the cooling water passing through the first heatsink 212.

When the top cooling member 210 having the above-described configuration is disposed on the top surface of the battery cell 100, the cooling water may be supplied into the first heatsink 212 through the first supply port 213, and the cooling water supplied into the first heatsink 212 may cool the entire top surface of the battery cell 100 while passing through the cooling water passage. Here, since the cooling water passage passes through the entire top surface of the battery cell 100, the entire top surface of the battery cell 100 may be uniformly cooled, and as a result, a temperature deviation of the entire top surface of the battery cell 100 may be minimized. The cooling water that has passed through the first heatsink 212 is discharged to the first discharge port 214.

The first supply port 213 and the first discharge port 214 may be detachably coupled to the upper extension part 211a. Thus, when the first supply port 213 and the first discharge port 214 are damaged, the first supply port 213 and the first discharge port 214 may be easily replaced.

The bottom cooling member 220 includes a bottom plate 221, a second heatsink 222, a second supply port 223 and a second discharge port 224.

The bottom plate 221 is made of a metal material and has an area covering the entire bottom surface of the battery cell 100. The bottom plate 221 is provided with a lower extension part 221a extending out of the battery cell 100, and the second supply port 223 and the second discharge port 224 are coupled to the lower extension part 221a. That is, the lower extension part 221a may separate the second supply port 223 and the second discharge port 224 from the battery cell 100 to prevent the second supply port 223 and the second discharge port 224 from being in contact with each other, and as a result, prevent the battery cell 100 from being damaged.

The second heatsink 222 is disposed on a bottom surface of the top plate 211 to cool the bottom surface of the battery cell 100 while the cooling water passes therethrough. Here, the second heatsink 222 has the same cooling water passage as the first heatsink 212. That is, referring to FIG. 5, the second heatsink 222 cools the entire bottom surface of the battery cell 100 while providing the cooling water passages through which the cooling water passes in the entire surface. The inlet of the cooling water passage is connected to the second supply port 223, and the outlet is connected to the second discharge port 224.

The second supply port 223 is configured to supply the cooling water to the second heatsink 222 and also is coupled to the top surface of the lower extension part 221a and is connected to the inlet of the cooling water passage provided in the second heatsink 222 to supply the cooling water to the cooling water passage of the second heatsink 222.

The second discharge port 224 is configured to discharge the cooling water passing through the second heatsink 222 and also is coupled to the top surface of the lower extension part 221a and is connected to the outlet of the cooling water passage provided in the second heatsink 222 to discharge the cooling water passing through the second heatsink 222.

When the bottom cooling member 220 having the above-described configuration is disposed on the bottom surface of the battery cell 100, the cooling water may be supplied into the second heatsink 222 through the second supply port 223, and the cooling water supplied into the second heatsink 222 may cool the entire bottom surface of the battery cell 100 while passing through the cooling water passage. Here, since the cooling water passage passes through the entire bottom surface of the battery cell 100, the entire bottom surface of the battery cell 100 may be uniformly cooled. The cooling water that has passed through the second heatsink 222 is discharged through the second discharge port 224.

In particular, the present invention has a structure in which the top cooling member 210 and the bottom cooling member 220 are symmetrical to each other, and thus, the top and bottom surfaces of the battery cell 100 may be uniformly cooled, particularly a temperature deviation of the top and bottom surfaces of the battery cell 100 may be minimized to improve cooling efficiency.

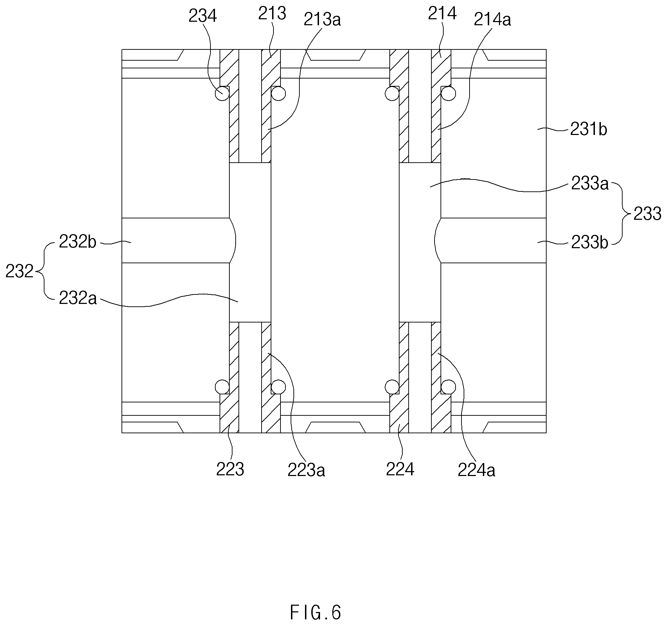

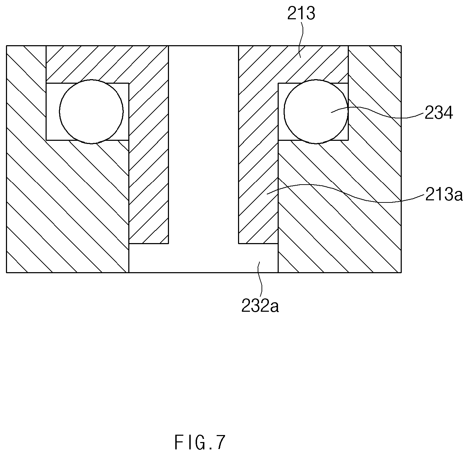

As illustrated in FIGS. 6 and 7, the connector member 230 includes a front plate 231, a supply part 232 and a collection part 233.

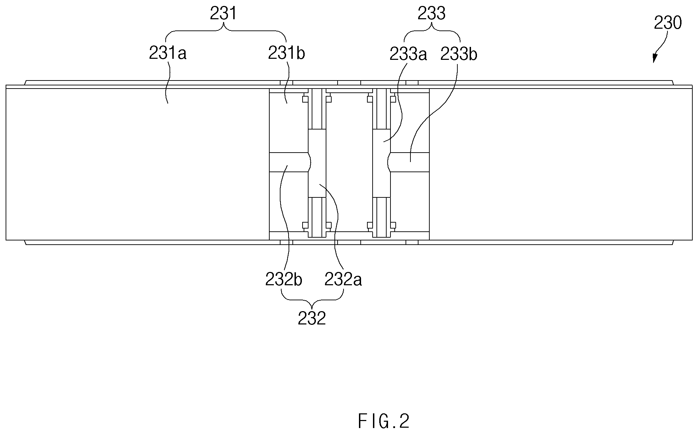

The front plate 231 is made of a metal material and covers one surface of the battery cell 100 in a full-length direction (a front surface of the battery cell when viewed in FIG. 2). That is, the front plate 231 is provided between a pair of side covers 231a, which cover both sides of one surface of the battery cell 100 in the full-length direction, respectively, and a central cover which is provided between the pair of side covers 231a and in which the supply part 232 and the collection part 233 are provided.

The front plate 231 may prevent the battery module 10 from increasing in volume because the supply part 232 and the collection part 233 are provided therein, and may protect the supply part 232 and the collection part 233 against an external impact.

The pair of side covers 231a and the central cover 231b may be integrally provided, as illustrated in FIG. 2, the central cover 231b may further protrude outward from the side covers 231a (front side of the battery cell when viewed in FIG. 2). Thus, a clearance (that is, an empty space) is provided between the central cover 231b and the battery cell 100, and the clearance allows the supply port and the battery cell 100 to be separated from being separated from each other and allows the discharge port and the battery cell 100 to be separated from being separated from each other, thereby preventing contact therebetween. In particular, the tolerance serves to block a temperature changes of the battery cell, which is caused by the cooling water passing through the supply part and the collection part.

The supply part 232 is configured to supply the cooling water to the first and second supply ports. That is, the supply part 232 includes a first connection passage 232a and a supply passage 232b.

The first connection passage 232a is provided to pass vertically through the central cover 231b when viewed in FIG. 1, and the first supply port 213 and the second supply port 223 are coupled to the first supply port 213 and the second supply port 223 to supply the cooling water to the first supply port 213 and the second supply port 223, respectively. The supply passage 232b passes from the outside of the central cover 231b to the first connection passage 232a to supply the cooling water to the first connection passage 232a.

The inlet of the supply passage 232b may be provided to pass from a side portion (left portion of the central cover 231b when viewed in FIG. 6) of the central cover 231b, which protrude to the outside of the side cover 231a, to the first connection passage 232a. That is, since the central cover protrudes more outward than the side cover, the supply passage may be connected to the first connection passage through a side surface of the central cover. Thus, when viewed in FIG. 2, usability of a space between a front surface of the side cover 231a and a left surface of the central cover 231b may increase, and as a result, an increase in volume of the battery module 10 in the full-length direction may be prevented.

The collection part 233 is configured to collect the cooling water discharged from the first and second discharge ports. That is, the collection part 233 includes a second connection passage 233a and a collection passage 233b.

When viewed in FIG. 1, the second connection passage 233a is provided to pass vertically through the central cover 231b, and the first discharge port 214 and the second discharge port 224 are coupled to upper and lower ends of the second connection passage 233a, respectively, so that the cooling water passes through the first and second discharge ports. In addition, the collection passage 233b passes from the side portion of the central cover 231b (a right side of the central cover 231b when viewed in FIG. 6) to the second connection passage 233a to collect the cooling water passing through the second connection passage 233a.

The collection passage 233b passes from the side portion of the central cover 231b protruding to the outside of the side cover 231a to the second connection passage 233a. That is, since the central cover protrudes more outward than the side cover, the collection passage may be connected to the second connection passage through the side surface of the central cover. Thus, usability of a side space of the central cover 231b may be improved, and as a result, the increase in volume of the battery module 10 in the full-length direction may be minimized.

A coupling hole 232c into which each of the first supply port 213 and the second supply port 223 is fitted may be defined in each of both ends of the first connection passage 232a, and each of the first and second supply ports 213 and 223 and the coupling hole 232c may have a diameter greater than that of the first connection passage 232a. Thus, after each of the first and second supply ports 213 and 223 is inserted into the coupling hole 232c, the first and second supply ports 213 and 223 may be supported by the first connection passage 232a to improve the coupling therebetween.

In particular, a coupling piece 213a that is fitted into the first connection passage 232a is disposed on each of the first supply port 213 and the second supply port 223. That is, the coupling piece 213a has a cylindrical shape. Thus, coupling force and sealing force between the first connection passage 232a and the first and second supply ports 213 and 223 may increase.

A sealing ring 234 may be provided between the coupling hole 232c of the first connection passage 232a and the first supply port 213 or between the coupling hole 232c of the first connection passage 232a and the second supply port 223. That is, sealing force between the coupling hole 232c of the first connection passage 232a and the first supply port 213 or between the coupling hole 232c of the first connection passage 232a and the second supply port 223 may be significantly improved. Two or more sealing rings 234 may be provided.

A coupling hole 233c into which each of the first and second discharge ports is fitted is defined in each of both ends of the second connection passage 233a, and each of the first and second discharge ports and the coupling hole 233c has a diameter greater than that of the second connection passage 233a. Thus, after each of the first and second discharge ports is inserted into the coupling hole 233c, the first and second discharge ports may be supported by the second connection passage 233a to improve coupling therebetween.

A coupling piece 214a coupled to the second connection passage 233a is disposed on each of the first discharge port 214 and the second discharge port 224. That is, the coupling piece 214a has a cylindrical shape. Thus, coupling force and sealing force between the second connection passage 233a and the first and second discharge ports may increase.

A sealing ring 234 may be provided between the coupling hole of the second connection passage 233a and the first discharge port 214 or between the coupling hole of the second connection passage 233a and the second discharge port 224. That is, sealing force between the coupling hole of the second connection passage 233a and the first supply port 214 or between the coupling hole of the second connection passage 233a and the second supply port 224 may be significantly improved.

The case assembly 200 may further include a pair of side plates 240 respectively covering both sides in the full-width direction of the battery cell 100. In particular, the side plate 240 may be integrated with the bottom plate 221 to improve efficiency when assembling the battery module.

The case assembly 200 may further include a rear plate 250 covering the other side of the battery cell 100 in the full-width direction. Thus, the other side of the battery cell 100 in the full-width direction may be stably protected.

On the other hand, the case assembly 200 may accommodate and cool the entire battery cell 100 while the top plate 211, the bottom plate 221, the pair of side plates 240, and the rear plate 250 are assembled.

The battery module 10 according to the first embodiment of the present invention having the above configuration may uniformly cool the upper and lower portions of the battery cell 100, and in particular, minimize the temperature deviation of the entire battery cell 100, and as a result, the cooling efficiency may be improved.

Hereinafter, a method of assembling and operating the battery module 10 according to the first embodiment of the present invention will be described.

### [Method for assembly and operating battery module according to first embodiment of the present invention]

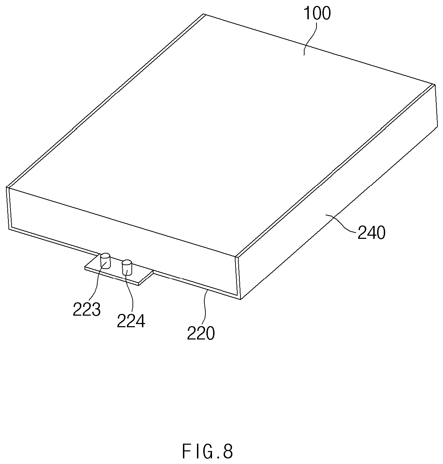

First, as illustrated in FIG. 8, a battery cell 100 is disposed on a top surface of a bottom plate 221 with which a side plate 240 is integrated. Here, a second supply port 223 and a second discharge port 224, which are coupled to a lower extension part 221a of the bottom plate 221, are spaced apart from the battery cell 100.

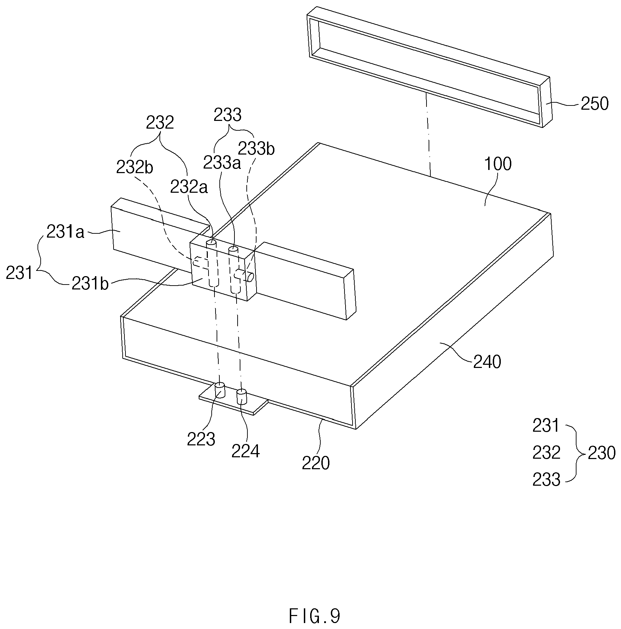

Next, as illustrated in FIG. 9, the connector member 230 is disposed on one surface of the battery cell 100 in a full-width direction, but a lower end of a first connection passage 232a and a second supply port 223, which are provided in the supply part 232, are coupled to each other, and a lower end of the second connection passage 233a and a second discharge port 224, which are provided in a collection part 233, are coupled to each other. Here, the second supply port 223 may be coupled to a coupling hole provided in a lower end of the first connection passage 232a, and a coupling piece 223a of the second supply port 223 may be coupled to the first connection passage 232a to improve coupling force. In addition, the second discharge passage may be coupled to a lower end of the second connection passage 233a, and a coupling piece 224a of the second discharge port 224 may be coupled to the second connection passage 233a to improve coupling force. In addition, a sealing ring 234 is provided between the first connection passage 232a and the second supply port 223 and between the second connection passage 233a and the second discharge port 224 to improve sealing force.

Next, a rear plate 250 is coupled to the other surface of the battery cell 100 in a full-length direction.

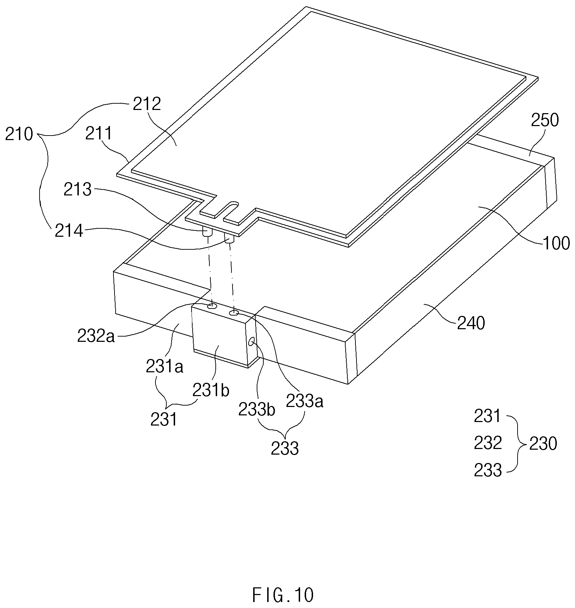

Next, as illustrated in FIG. 10, a top cooling member 210 is placed on an upper portion of the battery cell 100. Here, a first supply port 213 and a first discharge port 214, which are coupled to an upper extension part 211a of a top plate 211, are spaced apart from the battery cell 100. Then, the first supply port 213 and an upper end of the first connection passage 232a are coupled to each other, and the first discharge port 214 and an upper end of the second connection passage 233a are coupled to each other. Here, the first supply port 213 may be coupled to a coupling hole provided in an upper end of the first connection passage 232a, and a coupling piece 213a of the first supply port 213 may be coupled to the first connection passage 232a to improve coupling force. In addition, the first discharge passage may be coupled to an upper end of the second connection passage 233a, and a coupling piece 214a of the first discharge port 214 may be coupled to the second connection passage 233a to improve coupling force. In addition, a sealing ring 234 is provided between the first connection passage 232a and the first supply port 213 and between the second connection passage 233a and the first discharge port 214 to improve sealing force.

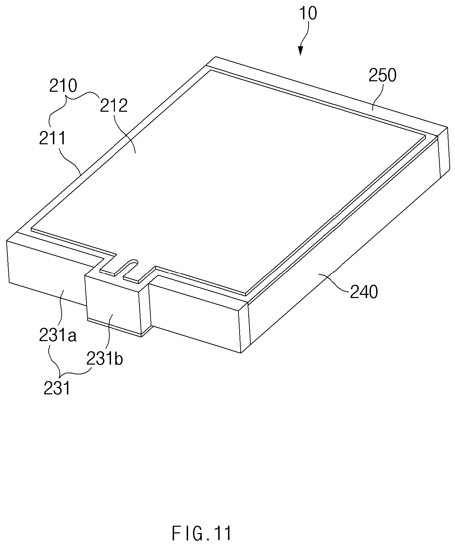

When the assembly is completed as described above, a finished battery module 10 as illustrated in FIG. 11 may be obtained.

In the finished battery module 10 as described above, a cooling water supply line is connected to a supply passage 232b of a supply part 232, and a cooling water collection line is connected to a collection passage 233b of a collection part 233. In addition, while charging and discharging the battery module 10, the cooling water is supplied to the battery module 10 through a supply line. Then, the cooling water supplied through the supply line sequentially passes through the supply passage 232b, the first connection passage 232a, and the first and second supply ports 213 of the supply part 232 and 223, and then is introduced into first and second heatsinks 212 and 222 to cool the entire battery cell 100. The cooling water passing through the first and second heatsinks 212 and 222 is introduced into the second connection passage 233a through the first and second discharge ports 214 and 224, and the cooling water introduced into the second connection passage 233a is collected into the collection line through the collection passage 233b. Next, the cooling water is supplied to the supply line again after performing a cooling process.

Hereinafter, in describing another embodiment of the present invention, the same reference numerals are used for the same components as those of the above-described embodiment, and duplicated descriptions will be omitted.

### [Battery pack according to second embodiment of the present invention]

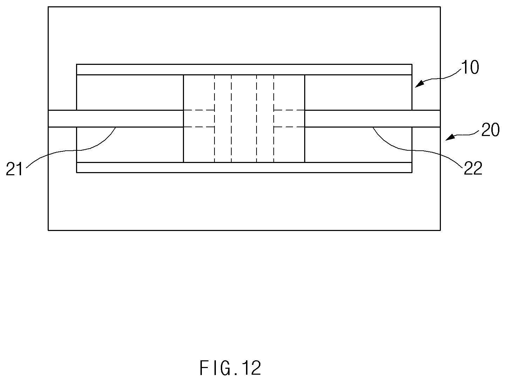

As illustrated in FIG. 12, a battery pack according to a second embodiment of the present invention includes a battery module 10; and a pack case 20 in which at least one or more battery modules 10 are accommodated.

The battery module 10 has the same configuration as the battery module 10 described in the first embodiment, and therefore, redundant description will be omitted.

The pack case 20 includes a supply line 21 that supplies cooling water to a supply passage 232b of the battery module 10 and a collection line through which the cooling water collected from the collection passage 233b of the battery module 10 passes. (22). That is, the supply line is connected to the supply passage 232b of a supply part 232 provided in the battery module 10, and the collection line is connected to the collection passage 233b of a collection part 233 provided in the battery module 10.

Therefore, the battery pack 1 according to the second embodiment of the present invention may improve cooling efficiency of the battery module 10 as a whole, and in particular, may minimize a cooling deviation.

### [Vehicle according to third embodiment of the present invention]

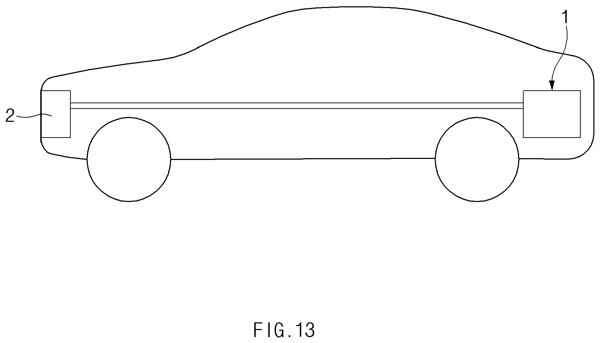

As illustrated in FIG. 13, a vehicle according to a third embodiment of the present invention includes a battery pack 1; and a cooling water supply device 2 configured to supply cooling water to a supply line of the battery pack 1 or collect the cooling water passing through a collection line.

The battery pack has the same configuration as the battery pack described in the second embodiment, and therefore, redundant description is omitted.

The cooling water supply device may be a radiator that cools an engine using the cooling water. That is, the radiator supplies a portion of the cooling water that cools the engine to the battery pack or collects the cooling water passing through the battery pack.

Therefore, the vehicle according to the third embodiment of the present invention may improve its performance by including the battery pack with high cooling efficiency.

The case assembly may function as the battery module or the battery pack, and in particular, the case assembly may separately include a housing, which accommodates the battery cells, at the outside thereof.

Accordingly, the scope of the present invention is defined by the appended claims more than the foregoing description and the exemplary embodiments described therein.

### [Description of the Symbols]

1: Battery pack
2: Cooling water supply device
10: Battery module
20: Pack case
21: Supply line
22: Collection line
100: Battery cell
200: Case assembly
210: Top cooling member
211: Top plate
211a: Upper extension part
212: First heatsink
213: First supply port
213a, 214a, 223a, 224a: Coupling piece
214: First discharge port
220: Bottom cooling member
221: Bottom plate
221a: Lower extension part
222: Second heatsink
223: Second supply port
224: Second discharge port
230: Connector member
231: Front plate
231a: Side cover
231b: Central cover
232: Supply part
232a: First connection passage
232b: Supply passage
232c: Coupling hole
233: Collection part
233a: Second connection passage
233c: Coupling hole
233b: Collection passage
234: Sealing ring
240: Side plate
250: Rear plate

## Claims

1. A battery module (10) comprising a case assembly (200) configured to accommodate and cool a battery cell (100),
wherein the case assembly (200) comprises:
a top cooling member (210) provided with a top plate (211) configured to cover a top surface of the battery cell (100), a first heatsink (212) configured to cool the top surface of the battery cell (100) while cooling water passes therethrough, a first supply port (213) configured to supply the cooling water to the first heatsink (212), and a first discharge port (214) configured to discharge the cooling water passing through the first heatsink (212);
a bottom cooling member (220) provided with a bottom plate (221) configured to cover a bottom surface of the battery cell (100), a second heatsink (222) configured to cool the bottom surface of the battery cell (100) while the cooling water passes therethrough, a second supply port (223) configured to supply the cooling water to the second heatsink (222), and a second discharge port (224) configured to discharge the cooling water passing through the second heatsink (222); and
a connector member (230) provided with a front plate (231) configured to cover one surface of the battery cell (100) in a full-length direction, a supply part (232) configured to supply the cooling water to the first and second supply port (213, 223), and a collection part (233) configured to collect the cooling water discharged from the first and second discharge ports (214, 224),
wherein the front plate (231) comprises:
a pair of side covers (231a) configured to cover both sides of the battery cell (100) in the full-length direction, respectively; and
a central cover (231b) which is provided between the pair of side covers (231a) and in which the supply part (232) and the collection part (233) are provided,
wherein the central cover (231b) further protrudes outward from each of the side covers (231a).

2. The battery module (10) of claim 1, wherein the supply part (232) and the collection part (233) are provided in the front plate (231).

3. The battery module (10) of claim 2, wherein the supply part (232) comprises:
a first connection passage (232a) provided in the central cover (231b) to pass vertically and having upper end lower ends, to which the first supply port (213) and the second supply port (223) are coupled respectively, to supply the cooling water to the first and second supply ports (213, 223); and
a supply passage (232b) configured to pass from the outside of the central cover (231b) to the first connection passage (232a) and supply the cooling water to the first connection passage (232a).

4. The battery module (10) of claim 3, wherein the supply passage (232b) is configured to pass from a side portion of the central cover (231b), which protrudes to the outside of the side cover (231a), to the first connection passage (232a).

5. The battery module (10) of claim 2, wherein the collection part (233) comprises:
a second connection passage (233a) provided in the central cover (231b) to vertically pass and having upper and lower ends, to which the first discharge port (214) and the second discharge (224) port are coupled, respectively, so that the cooling water discharged from the first and second discharge ports (214, 224) passes therethrough; and
a collection passage (233b) configured to pass from a side portion of the central cover (231b) to the second connection passage (233a) and collect the cooling water passing through the second connection passage (233a).

6. The battery module (10) of claim 5, wherein the collection passage (233b) is configured to pass from a side portion of the central cover (231b), which protrudes to the outside of the side cover (231a), to the second connection passage (233a).

7. The battery module (10) of claim 3, wherein a coupling hole (232c) into which each of the first and second supply ports (213, 223) is fitted is defined in each of both ends of the first connection passage (232a), and
a coupling piece (213a) coupled to the first connection passage (232a) is disposed on each of the first supply port (213) and the second supply port (223).

8. The battery module (10) of claim 5, wherein a coupling hole (232c) into which each of the first and second discharge ports (214, 224) is fitted is defined in each of both ends of the second connection passage (233a), and
a coupling piece (214a) coupled to the second connection passage (233a) is disposed on each of the first discharge port (214) and the second discharge port (224).

9. The battery module (10) of claim 7, wherein a sealing ring (234) is provided between a coupling hole (232c) of the first connection passage (232a) and the first supply port (213) or between the coupling hole (232c) of the first connection passage (232a) and the second supply port (223).

10. The battery module (10) of claim 8, wherein a sealing ring (234) is provided between a coupling hole (232c) of the second connection passage (233a) and the first discharge port (214) or between the coupling hole (232c) of the second connection passage (233a) and the second discharge port (224).

11. The battery module (10) of claim 1, further comprising a pair of side plates (240) configured to cover both sides of the battery cell (100) in the full-width direction, respectively.

12. The battery module (10) of claim 11, wherein the pair of side plates (240) and the bottom plate (221) are integrated with each other.

13. The battery module (10) of claim 1, further comprising a rear plate (250) configured to cover the other side of the battery cell (100) in the full-length direction.

14. A battery pack (1) comprising:
the battery module (10) of claim 1; and
a pack case (20) in which at least one or more battery modules (10) are accommodated,
wherein the pack case (20) comprises:
a supply line (21) configured to supply cooling water to a supply passage (232b) of the battery module (10); and
a collection line (22) through which the cooling water collected from a collection passage (233b) of the battery module (10) passes.

15. A vehicle comprising:
a battery pack (1) of claim 14; and
a cooling water supply device (2) configured to supply cooling water to a supply line (21) of the battery pack (1) or collect the cooling water passing through the collection line (22).

## Patentansprüche

1. Batteriemodul (10), umfassend eine Gehäuseanordnung (200), welche dazu eingerichtet ist, eine Batteriezelle (100) aufzunehmen und zu kühlen, wobei die Gehäuseanordnung (200) umfasst:
ein oberes Kühlelement (210), welches mit einer oberen Platte (211), welche dazu eingerichtet ist, eine obere Fläche der Batteriezelle (100) abzudecken, einer ersten Kühlkörper (212), welche dazu eingerichtet ist, die obere Fläche der Batteriezelle (100) zu kühlen, während Kühlwasser dadurch passiert, einer ersten Zuführungsmündung (213), welche dazu eingerichtet ist, das Kühlwasser der ersten Kühlkörper (212) zuzuführen, und einer ersten Auslassmündung (214) bereitgestellt ist, welche dazu eingerichtet ist, das durch die erste Kühlkörper (212) passierende Kühlwasser auszulassen;
ein unteres Kühlelement (220), welches mit einer unteren Platte (221), welche dazu eingerichtet ist, eine untere Fläche der Batteriezelle (100) abzudecken, einer zweiten Kühlkörper (222), welche dazu eingerichtet ist, die untere Fläche der Batteriezelle (100) zu kühlen, während das Kühlwasser dadurch passiert, einer zweiten Zuführungsmündung (223), welche dazu eingerichtet ist, das Kühlwasser der zweiten Kühlkörper (222) zuzuführen, und einer zweiten Auslassmündung (224) bereitgestellt ist, welche dazu eingerichtet ist, das durch die zweite Kühlkörper (222) passierende Kühlwasser auszulassen; und
ein Verbindungselement (230), welches mit einer Frontplatte (231), welche dazu eingerichtet ist, eine Fläche der Batteriezelle (100) in einer vollen Längenrichtung abzudecken, einem Zuführungsteil (232), welcher dazu eingerichtet ist, das Kühlwasser zu der ersten und der zweiten Zuführungsmündung (213, 223) zuzuführen, und einem Sammlungsteil (233) bereitgestellt ist, welcher dazu eingerichtet ist, das von der ersten und der zweiten Auslassmündung (214, 224) ausgelassene Kühlwasser zu sammeln,
wobei die Frontplatte (231) umfasst:
ein Paar von Seitenabdeckungen (231a), welche dazu eingerichtet sind, beide Seiten der Batteriezelle (100) jeweils in der vollen Längenrichtung abzudecken; und
eine zentrale Abdeckung (231b), welche zwischen dem Paar von Seitenabdeckungen (231a) bereitgestellt ist und in welcher der Zuführungsteil (232) und der Sammlungsteil (233) bereitgestellt sind,
wobei die zentrale Abdeckung (231b) ferner auswärts von jeder der Seitenabdeckungen (231a) hervorsteht.

2. Batteriemodul (10) nach Anspruch 1, wobei der Zuführungsteil (232) und der Sammlungsteil (233) in der Frontplatte (231) bereitgestellt sind.

3. Batteriemodul (10) nach Anspruch 2, wobei der Zuführungsteil (232) umfasst:
eine erste Verbindungspassage (232a), welche in der zentralen Abdeckung (231b) bereitgestellt ist, um vertikal zu passieren und obere und untere Enden aufzuweisen, mit welchen die erste Zuführungsmündung (213) und die zweite Zuführungsmündung (223) jeweils gekoppelt sind, um das Kühlwasser der ersten und der zweiten Zuführungsmündung (213, 223) zuzuführen; und
eine Zuführungspassage (232b), welche dazu eingerichtet ist, von dem Äußeren der zentralen Abdeckung (231b) zu der ersten Verbindungspassage (232a) zu passieren und das Kühlwasser der ersten Verbindungspassage (232a) zuzuführen.

4. Batteriemodul (10) nach Anspruch 3, wobei die Zuführungspassage (232b) dazu eingerichtet ist, von einem Seitenabschnitt der zentralen Abdeckung (231b), welche zu dem Äußeren der Seitenabdeckung (231a) hervorsteht, zu der ersten Verbindungspassage (232a) zu passieren.

5. Batteriemodul (10) nach Anspruch 2, wobei der Sammlungsteil (233) umfasst:
eine zweite Verbindungspassage (233a), welche in der zentralen Abdeckung (231b) bereitgestellt ist, um vertikal zu passieren und obere und untere Enden aufzuweisen, mit welchen die erste Auslassmündung (214) und die zweite Auslass-(224)-Mündung jeweils gekoppelt sind, sodass das von der ersten und der zweiten Auslassmündung (214, 224) ausgelassene Kühlwasser dadurch passiert; und
eine Sammlungspassage (233b), welche dazu eingerichtet ist, von einem Seitenabschnitt der zentralen Abdeckung (231b) zu der zweiten Verbindungspassage (233a) zu passieren und das Kühlwasser zu sammeln, welches durch die zweite Verbindungspassage (233a) passiert.

6. Batteriemodul (10) nach Anspruch 5, wobei die Sammlungspassage (233b) dazu eingerichtet ist, von einem Seitenabschnitt der zentralen Abdeckung (231b), welche zu dem Äußeren der Seitenabdeckung (231a) hervorsteht, zu der zweiten Verbindungspassage (233a) zu passieren.

7. Batteriemodul (10) nach Anspruch 3, wobei ein Kopplungsloch (232c), in welches jede von der ersten und der zweiten Zuführungsmündung (213, 223) eingepasst ist, in jedem von beiden Enden der ersten Verbindungspassage (232a) definiert ist, und
ein Kopplungsstück (213a), welches mit der ersten Verbindungspassage (232a) gekoppelt ist, an jeder von der ersten Zuführungsmündung (213) und der zweiten Zuführungsmündung (223) angeordnet ist.

8. Batteriemodul (10) nach Anspruch 5, wobei ein Kopplungsloch (232c), in welches jede von der ersten und der zweiten Auslassmündung (214, 224) eingepasst ist, in jedem von beiden Enden der zweiten Verbindungspassage (233a) definiert ist, und
ein Kopplungsstück (214a), welches mit der zweiten Verbindungspassage (233a) gekoppelt ist, an jeder von der ersten Auslassmündung (214) und der zweiten Auslassmündung (224) angeordnet ist.

9. Batteriemodul (10) nach Anspruch 7, wobei ein Dichtungsring (234) zwischen einem Kopplungsloch (232c) der ersten Verbindungspassage (232a) und der ersten Zuführungsmündung (213) oder zwischen dem Kopplungsloch (232c) der ersten Verbindungspassage (232a) und der zweiten Zuführungsmündung (223) bereitgestellt ist.

10. Batteriemodul (10) nach Anspruch 8, wobei ein Dichtungsring (234) zwischen einem Kopplungsloch (232c) der zweiten Verbindungspassage (233a) und der ersten Auslassmündung (214) oder zwischen dem Kopplungsloch (232c) der zweiten Verbindungspassage (233a) und der zweiten Auslassmündung (224) bereitgestellt ist.

11. Batteriemodul (10) nach Anspruch 1, ferner umfassend ein Paar von Seitenplatten (240), welches dazu eingerichtet ist, beide Seiten der Batteriezelle (100) jeweils in der vollen Längenrichtung abzudecken.

12. Batteriemodul (10) nach Anspruch 11, wobei das Paar von Seitenplatten (240) und die untere Platte (221) miteinander integriert sind.

13. Batteriemodul (10) nach Anspruch 1, ferner umfassend eine hintere Platte (250), welche dazu eingerichtet ist, die andere Seite der Batteriezelle (100) in der vollen Längenrichtung abzudecken.

14. Batteriepack (1) umfassend:
das Batteriemodul (10) nach Anspruch 1; und
ein Packgehäuse (20), in welchen wenigstens ein oder mehrere Batteriemodule (10) aufgenommen sind,
wobei das Packgehäuse (20) umfasst:
eine Zuführungsleitung (21), welche dazu eingerichtet ist, Kühlwasser einer Zuführungspassage (232b) des Batteriemoduls (10) zuzuführen; und
eine Sammlungsleitung (22), durch welche das von einer Sammlungspassage (233b) des Batteriemoduls (10) gesammelte Kühlwasser passiert.

15. Fahrzeug umfassend:
einen Batteriepack (1) nach Anspruch 14; und
eine Kühlwasserzuführungsvorrichtung (2), welche dazu eingerichtet ist,
Kühlwasser einer Zuführungsleitung (21) des Batteriepacks (1) zuzuführen, oder
das durch die Sammlungsleitung (22) passierende Kühlwasser zu sammeln.

## Revendications

1. Module de batterie (10) comprenant un ensemble boîtier (200) configuré pour loger et refroidir un élément de batterie (100), dans lequel l'ensemble boîtier (200) comprend :
un élément de refroidissement supérieur (210) doté d'une plaque supérieure (211) configurée pour recouvrir une surface supérieure de l'élément de batterie (100), un premier dissipateur thermique (212) configuré pour refroidir la surface supérieure de l'élément de batterie (100) pendant que de l'eau de refroidissement passe à travers celui-ci, un premier orifice d'alimentation (213) configuré pour alimenter le premier dissipateur thermique (212) en eau de refroidissement, et un premier orifice d'évacuation (214) configuré pour évacuer l'eau de refroidissement passant à travers le premier dissipateur thermique (212) ;
un élément de refroidissement inférieur (220) doté d'une plaque inférieure (221) configurée pour recouvrir une surface inférieure de l'élément de batterie (100), un second dissipateur thermique (222) configuré pour refroidir la surface inférieure de l'élément de batterie (100) pendant que l'eau de refroidissement passe à travers celui-ci, un second orifice d'alimentation (223) configuré pour alimenter le second dissipateur thermique (222) en eau de refroidissement et un second orifice d'évacuation (224) configuré pour évacuer l'eau de refroidissement passant à travers le second dissipateur thermique (222) ; et
un élément connecteur (230) doté d'une plaque avant (231) configurée pour recouvrir une surface de l'élément de batterie (100) dans une direction de longueur totale, une partie d'alimentation (232) configurée pour alimenter les premier et second orifices d'alimentation (213, 223) en eau de refroidissement, et une partie de collecte (233) configurée pour collecter **l'eau** de refroidissement évacuée des premier et second orifices d'évacuation (214, 224),
dans lequel la plaque avant (231) comprend :
une paire de couvercles latéraux (231a) configurés pour recouvrir les deux côtés de l'élément de batterie (100) dans la direction de longueur totale, respectivement ; et
un couvercle central (231b) qui est prévu entre la paire de couvercles latéraux (231a) et dans lequel la partie d'alimentation (232) et la partie de collecte (233) sont prévues, dans lequel le couvercle central (231b) fait en outre saillie vers l'extérieur à partir de chacun des couvercles latéraux (231a).

2. Module de batterie (10) selon la revendication 1, dans lequel la partie d'alimentation (232) et la partie de collecte (233) sont prévues dans la plaque avant (231).

3. Module de batterie (10) selon la revendication 2, dans lequel la partie d'alimentation (232) comprend :
un premier passage de connexion (232a) prévu dans le couvercle central (231b) pour passer verticalement et ayant des extrémités inférieure et supérieure, auxquelles le premier orifice d'alimentation (213) et le second orifice d'alimentation (223) sont respectivement couplés, pour alimenter les premier et second orifices d'alimentation (213, 223) en eau de refroidissement ; et
un passage d'alimentation (232b) configuré pour passer de l'extérieur du couvercle central (231b) au premier passage de connexion (232a) et alimenter le premier passage de connexion (232a) en eau de refroidissement.

4. Module de batterie (10) selon la revendication 3, dans lequel le passage d'alimentation (232b) est configuré pour passer d'une partie latérale du couvercle central (231b), qui fait saillie vers l'extérieur du couvercle latéral (231a), au premier passage de connexion (232a).

5. Module de batterie (10) selon la revendication 2, dans lequel la partie de collecte (233) comprend :
un second passage de connexion (233a) prévu dans le couvercle central (231b) pour passer verticalement et ayant des extrémités supérieure et inférieure, auxquelles le premier orifice d'évacuation (214) et le second orifice d'évacuation (224) sont couplés, respectivement, de sorte que l'eau de refroidissement évacuée à partir des premier et second orifices d'évacuation (214, 224) passe à travers ; et
un passage de collecte (233b) configuré pour passer d'une partie latérale du couvercle central (231b) au second passage de connexion (233a) et collecter l'eau de refroidissement passant à travers le second passage de connexion (233a).

6. Module de batterie (10) selon la revendication 5, dans lequel le passage de collecte (233b) est configuré pour passer d'une partie latérale du couvercle central (231b), qui fait saillie vers l'extérieur du couvercle latéral (231a), au second passage de connexion (233a).

7. Module de batterie (10) selon la revendication 3, dans lequel un trou de couplage (232c) dans lequel chacun des premier et second orifices d'alimentation (213, 223) est aménagé est défini dans chacune des deux extrémités du premier passage de connexion (232a), et
une pièce de couplage (213a) couplée au premier passage de connexion (232a) est disposée sur chacun du premier orifice d'alimentation (213) et du second orifice d'alimentation (223).

8. Module de batterie (10) selon la revendication 5, dans lequel un trou de couplage (232c) dans lequel chacun des premier et second orifices d'évacuation (214, 224) est aménagé est défini dans chacune des deux extrémités du second passage de connexion (233a), et
une pièce de couplage (214a) couplée au second passage de connexion (233a) est disposée sur chacun du premier orifice d'évacuation (214) et du second orifice d'évacuation (224).

9. Module de batterie (10) selon la revendication 7, dans lequel une bague d'étanchéité (234) est prévue entre un trou de couplage (232c) du premier passage de connexion (232a) et le premier orifice d'alimentation (213) ou entre le trou de couplage (232c) du premier passage de connexion (232a) et le second orifice d'alimentation (223).

10. Module de batterie (10) selon la revendication 8, dans lequel une bague d'étanchéité (234) est prévue entre un trou de couplage (232c) du second passage de connexion (233a) et le premier orifice d'évacuation (214) ou entre le trou de couplage (232c) du second passage de connexion (233a) et le second orifice d'évacuation (224).

11. Module de batterie (10) selon la revendication 1, comprenant en outre une paire de plaques latérales (240) configurées pour recouvrir les deux côtés de l'élément de batterie (100) dans la direction de largeur totale, respectivement.

12. Module de batterie (10) selon la revendication 11, dans lequel la paire de plaques latérales (240) et la plaque inférieure (221) sont intégrées l'une à l'autre.

13. Module de batterie (10) selon la revendication 1, comprenant en outre une plaque arrière (250) configurée pour recouvrir l'autre côté de l'élément de batterie (100) dans la direction de longueur totale.

14. Pack-batterie (1) comprenant :
le module de batterie (10) selon la revendication 1 ; et
un boîtier de pack (20) dans lequel au moins un ou plusieurs modules de batterie (10) sont logés ;
dans lequel le boîtier de pack (20) comprend :
une conduite d'alimentation (21) configurée pour alimenter un passage d'alimentation (232b) du module de batterie (10) en eau de refroidissement ; et
une conduite de collecte (22) à travers laquelle passe l'eau de refroidissement collectée à partir d'un passage de collecte (233b) du module de batterie (10).

15. Véhicule comprenant :
un pack-batterie (1) selon la revendication 14 ; et
un dispositif d' alimentation en eau de refroidissement (2) configuré pour alimenter une conduite d'alimentation (21) du pack-batterie (1) en eau de refroidissement ou collecter l'eau de refroidissement passant à travers la conduite de collecte (22).
